# EUROPÄISCHE PATENTSCHRIFT

(11) **EP 0 630 091 B1**
(45) Veröffentlichungstag und Bekanntmachung des Hinweises auf die Patenterteilung: **02.01.1997**
(21) Anmeldenummer: 94109062.3
(22) Anmeldetag: 14.06.1994
(51) Int. Cl.: H02G 3/10, H02G 3/14

(54) **Verteilerkasten für Fernmeldekabel**
Distribution housing for telecommunication cable
Armoire de distribution pour câbles de télécommunication

(30) Priorität: 18.06.1993 DE 4320261
(43) Veröffentlichungstag der Anmeldung: 21.12.1994
(73) Patentinhaber: FMT FERNMELDETECHNIK PRODUKTIONS GmbH. & Co.KG., D-99819 Marksuhl (DE); GECO SYSTEMTECHNIK GmbH, D-19071 Brüsewitz (DE); MEISSENER NACHRICHTENTECHNIK GmbH, D-01162 Meissen (DE)
(72) Erfinder: Koch, Fritz Eduard, D-58579 Schalksmühle (DE); Krüger, Wolfgang, Dipl.-Ing., D-25337 Kölln-Reisiek (DE); Hinkel, Hubert, Dr.-Ing., D-01162 Meissen (DE); Riccardi, Oliver, D-58579 Schalksmühle (DE); Rosenstock, Jürgen, D-58579 Schalksmühle (DE)
(74) Vertreter: Patentanwälte Dipl.-Ing. Conrad Köchling Dipl.-Ing. Conrad-Joachim Köchling

(56) Entgegenhaltungen:
- DE-A- 3 508 693
- DE-A- 3 623 355
- FR-A- 537 288
- FR-A- 2 628 577
- US-A- 2 924 639
- US-A- 3 618 804

## Beschreibung

Die Erfindung betrifft einen Verteilerkasten für Fernmeldekabel gemäß Oberbegriff des Anspruches 1.

Im Stand der Technik sind diverse Verteilerkästen bekannt. Beispielsweise ist in der DE 35 08 693 C2 ein Verteilerkasten beschrieben. Der Verteilerkasten besteht dabei aus einer Grundplatte und einer topfartigen Abdeckkappe. Zur Befestigung der Abdeckkappe an der Grundplatte sind säulenartige Stützelemente vorgesehen, die an der Grundplatte befestigt sind und an denen die Abdeckkappe durch deren stirnflächige Schrauben befestigbar ist.

Aus der DE 36 02 730 C1 ist ein weiterer Verteilungskasten bekannt, wobei dort ebenfalls eine Grundplatte und eine topfartige Abdeckkappe vorgesehen ist. Zur Befestigung der Abdeckkappe an der Grundplatte sind in den Ecken der Grundplatte Formteile aus Kunststoff vorgesehen, an welchen einerseits hakenartige Schließteile der Kappe angreifen können und andererseits ein Baskülverschluß angreifen kann.

Bei den Ausführungsformen gemäß obigem Stand der Technik gemein ist, daß jeweils eine Grundplatte, eine topfartige Abdeckkappe mit vier Seitenwandungsteilen und einer Stirnwand sowie vier domartige Befestigungselemente vorgesehen sein müssen. Konkret bedeutet dies, daß neben den eigentlichen, den Kasten bildenden Elementen, nämlich der Grundplatte und der Abdeckkappe weitere Elemente vorgesehen sein müssen, die zur Fixierung der Teile aneinander benötigt werden.

Aus der US-A-2 924 639 ist ein gattungsgemäßer Verteilerkasten bekannt. Der Verteilerkasten besteht aus einer im Querschnitt U-förmigen Grundplatte und einer ebenfalls im Querschnitt U-förmigen Abdeckkappe, wobei die beiden Teile zueinander kreuzend angeordnet sind.

Um die Abdeckkappe an der Grundplatte zu haltern, ist die Abdeckkappe biegbar, so daß sie hinter Vorsprünge der Schenkel des Grundteiles greifen und dort verrasten kann.

Diese Montageweise hat aber den Nachteil, daß die Rastverbindung ebenso leicht auch von unbefugter Hand zu lösen ist, so daß der Zusammenhalt der Teile nur unzureichend ist.

Aus der FR-A-2 628 577 ist ein weiterer gattungsgemäßer Verteilerkasten bekannt, der ebenfalls aus einer U-förmigen Grundplatte und einer U-förmigen Abdeckkappe besteht. Die Teile sind lediglich steckverbunden, wobei ein Zusammenhalt der Teile nur durch zusätzliche Maßnahmen gewährleistet ist. Zudem ist auch dabei in einfacher Weise ein unbefugtes Öffnen des Verteilerkastens möglich, indem die Wandungsteile der Abdeckkappe bespielsweise mittels eines Schraubendrehers angehoben und ausgehebelt werden.

Ausgehend von dem eingangs bezeichneten Stand der Technik liegt der Erfindung die Aufgabe zugrunde, einen Verteilerkaster gattunsgemäßer Art zu schaffen, der bei weiterhin einfachem Aufbau und unter Anwendung möglichst weniger Einzelteile sehr funktionell ausgebildet ist, einfach zu handhaben ist und eine einfache Vorfixierung der Einzelteile aneinander ermöglicht ist, wobei auch weitestgehend ein Zugriffschutz gegen unbefugte Öffnung des Verteilerkastens gebildet ist.

Die Lösung dieser Aufgabe ist in Anspruch 1 angegeben.

Gemäß dieser Ausbildung besteht der Verteilerkasten prinzipiell aus zwei rinnenförmigen Elementen, die kreuzweise mit zueinander gerichteten Mündungen orientiert, aufeinandergesteckt und aneinander fixiert werden können. Die Fixierung kann in beliebiger Weise erfolgen.

Aufgrund dieser Ausbildung ist bei einer einfachsten Ausführungsform eines solchen Verteilerkastens die Ausbildung von lediglich zwei Bauteilen, nämlich der U-förmigen Abdeckkappe und der U-förmigen Grundplatte erforderlich. Diese Teile können selbst die entsprechenden Befestigungs- oder Verbindungsmittel umfassen, so daß dann auf separate Fertigung, Montage und Lagerhaltung weiterer Teile verzichtet werden kann.

Die Ausbildung ist äußerst funktionell, da in einfacher Weise ein Zusammenfügen der Teile möglich ist.

Durch die Besonderheit, daß die Abdeckkappe mit der Grundplatte mittels Steckschiebe-Befestigungsmitteln verbindbar ist, wobei die Verriegelung der Teile aneinander durch Längsverschiebung der Abdeckkappe parallel zur Längsmittelachse ihrer U-Form relativ zur Grundplatte erfolgt, wird eine einfache Verbindung und vorläufige Lagesicherheit erreicht.

Bei dieser Ausbildung erfolgt die Fixierung der Elemente aneinander durch Parallelverschiebung der Elemente zueinander. Die Teile umfassen dabei selbst die entsprechenden Steck-Schiebe-Befestigungsmittel. Durch die gewählte Gestaltung ist ein selbsthaltender Zusammengriff der beiden Elemente des Verteilerkastens gewährleistet. Solche Verteilerkästen werden üblicherweise an lotrechten Wänden mit ihrer Grundplatte befestigt. Durch das Zuführen und Verschieben der Abdeckkappe in die Verriegelungsposition wird erreicht, daß die Verriegelungsposition selbständig beibehalten wird, sofern, wie dies vorzugsweise vorgesehen ist, die Verriegelungsmittel dann im Sinne des Verriegelns wirksam sind, wenn die Abdeckkappe unter Schwerkrafteinwirkung in der Einbaulage nach unten verschoben wird.

Durch diese Ausbildung ist bei einfachem Aufbau und unter Verminderung der Einzelteile eine besonders funktionelle Ausbildung und eine einfache Handhabung gewährleistet.

Um einen möglichst spaltfreien Zusammenhalt der Einzelteile zu erreichen, ist die Ausbildung vornehmlich so getroffen, daß die Höhe der oberen und unteren Stirnwand der Grundplatte so gewählt ist, daß bei in Montagesollage befindlicher Abdeckkappe, d.h. nach deren Aufsetzen und Verriegelung in der Endposition, die Innenfläche der Kappenstirnwand sowohl auf der Randkante der oberen als auch der unteren Grundplattenstirnwand aufliegt.

Eine bevorzugte Weiterbildung wird darin gesehen, daß an den freien Randkanten der die Kastenseitenwände bildenden Wandungsteile der Abdeckkappe gleichgerichtete L-förmige Ausnehmungen ausgebildet sind, deren einer Schenkel randoffen ausmündet und parallel zu dem Profilschenkel der Abdeckkappe verläuft, die die Seitenwandung bildet, und daß an den stirnwandfreien Randkanten oder nahe der stirnwandfreien Randkanten des Bodens der Grundplatte Riegelstege oder dergleichen Riegelmittel ausgebildet sind, auf die die Seitenwandungsteile der Abdeckkappe mit ihren L-förmigen Ausnehmungen aufsteckbar und durch Parallelverschiebung der Teile zueinander verriegelbar sind.

Diese Ausbildung ist im Sinne der Aufgabenstellung besonders förderlich.

Desweiteren ist besonders bevorzugt vorgesehen, daß an den stirnwandfreien Längsrandkanten des Bodens der Grundplatte durch zueinander parallele, vom Boden zur Abdeckkappe hin abragende Wandungsteile Einsteckschlitze für die freien Randkanten der Seitenwandungen der Abdeckkappe gebildet sind, die zwischen den Wandungsteilen Verbindungsstege aufweisen, die als Riegelelemente dienen und die mit den L-förmigen Ausnehmungen der Seitenwandungen der Abdeckkappe als Verriegelungsmittel zusammenwirken.

Durch diese Ausbildung wird erreicht, daß die an den unteren Randkanten der Abdeckungsseitenwände ausgebildeten L-förmigen Ausnehmungen, die quasi Haken bilden, in die taschenartigen Einsteckschlitze eingesteckt werden können, in denen auch die als Haken-Gegenlager ausgebildeten Verriegelungsmittel, beispielsweise Stege oder ähnliche Elemente angeordnet sind.

In der Verriegelungsposition sind damit die Randkanten der Seitenwände geschützt in dem Schlitz angeordnet, so daß sie nicht anhebelbar sind. Auch ist die Hakenfunktion für Dritte nicht erkennbar, da die L-förmigen Ausnehmungen und die Verriegelungsmittel innerhalb der den Schlitz bildenden Wandungsteile angeordnet sind.

Weiterhin ist bevorzugt vorgesehen, daß die Abdeckkappe einstückig ist.

Vornehmlich ist die Abdeckkappe ein Blechformteil, welches kostengünstig und in einfacher Weise im Wege eines Stanzbiegevorganges gefertigt werden kann.

Dabei ist bevorzugt vorgesehen, daß die Seitenwandungen der Abdeckkappe durch parallel zu ihren Randkanten verlaufende Abkantungen versteift sind.

Um eine gute Führung beim Zusammenfügen der Einzelteile zu erreichen ist zudem vorgesehen, daß die Stirnwände der Grundplatte an ihren freien Enden Auflageflächenbereiche für die Ränder des Kastenstirnwandungsteiles der Abdeckkappe bilden, deren Flächenersteckung in Schieberichtung der Abdeckkappe gering größer als der Verschiebeweg der Abdeckkappe ist.

Dabei ist zum flächenbündigen Einbau und zum Schutz der Stirnkanten des Stirnwandbereiches vorgesehen, daß die ersten Flächenbereiche durch vorspringende zweite Flächenbereiche begrenzt sind, deren Überstandshöhe über die ersten Flächenbereiche der Wandstärke der Stirnwand der Abdeckkappe gleicht.

Zudem kann vorgesehen sein, daß an der Stirnwand der Abdeckkappe ein Verschlußmittel gehaltert ist, mittels dessen die in Schließlage befindliche Abdeckkappe gegen Verschiebung verriegelt ist.

Die Anordnung von solchen Verschlußmitteln ist dann erforderlich, wenn eine Sperrung der Öffnungsbewegung gegen unbefugten Zugriff erwünscht ist.

Bevorzugt ist dabei vorgesehen, daß an der Stirnwand der Abdeckkappe ein Schubriegel oder vorzugsweise ein schlüsselbetätigbarer Drehriegel gehaltert ist, der bei in Schließlage befindlicher Abdeckkappe gegen die Innenfläche einer Stirnwand der Grundplatte anlegbar ist und so die Relativverschiebung von Abdeckkappe zur Grundplatte verhindert.

Desweiteren ist bevorzugt vorgesehen, daß die Grundplatte einstückig aus Kunststoff geformt ist.

Alternativ kann auch vorgesehen sein, daß die Grundplatte aus Kunststoff geformt ist, wobei ein Bestandteil deren Boden und weitere Bestandteile die am Boden befestigbaren Stirnwände sind.

Bei dieser Ausbildung ist zwar die Anzahl der Einzelteile vergrößert, jedoch ergibt sich hieraus die Möglichkeit unterschiedliche Stirnwände, je nach Installationszweck, einzusetzen.

Dabei ist bevorzugt vorgesehen, daß die Stirnwände am Boden steck- und/oder rastbefestigbar sind.

Besonders bevorzugt ist vorgesehen, daß die Stirnwände mittels manuell betätigbarer Rastelemente am Boden befestigbar sind.

Desweiteren kann vorgesehen sein, daß die Stirnwände ausschneidbare Vorprägungen und/oder Bohrer-Führungsschlitze zum Ausbohren von Kabeleinführungen aufweisen.

Auch kann vorgesehen sein, daß die Stirnwände auswechselbare Kabeleinlaßplatten aufweisen.

Vorallem bei fest an dem Boden der Grundplatte angeformten Stirnwänden oder Stirnwandbereichen können diese Stirnwände oder Stirnwandbereiche mit separaten Kabeleinlaßplatten versehen sein, die beispielsweise von oben, von unten oder von vorn zur Ergänzung der Stirnwand einsetzbar und verrastbar oder sonst in geeigneter Weise verbindbar sind.

Eine bevorzugte Weiterbildung wird auch darin gesehen, daß die Stirnwände als Doppelstirnwand (untere und obere) ausgebildet sind, so daß eine Doppelstirnwand an zwei angereihten Böden zweier Verteilerkästen befestigbar ist und eine starre Brücke zwischen den Böden bildet.

Durch diese Ausbildung ist es möglich, mehrere Verteilerkästen in einfacher Weise aneinander anzureihen.

Zum Zwecke der Montageerleichterung ist zudem vorteilhaft, wenn am Boden der Grundplatte Befestigungsblöcke mit Sacklöchern für selbstschneidende Schrauben, insbesondere zur Befestigung von den Mittelbereich des Bodens überbauenden Klemmenleisten ausgebildet sind.

Beispielsweise können mit der Grundplatte einstückig ausgebildete Befestigungsblöcke mit Sacklöchern für selbstschneidende Schrauben vorgesehen sein. Diese Blöcke können vorwiegend zur Befestigung von Klemmleisten dienen, die den Grundplattenmittelbereich überbauen. Zwischen den erhöhten Blöcken und seitlich von diesen bleiben Freiräume für innerhalb des Verteilerkastens verlegte Kabeladern oder Kabel bestehen. Auch im Mittelbereich der Grundplatte können niedrigere Befestigungsblöcke angeformt sein. Die Grundplatte kann auch auf ihrer gesamten nutzbaren Grundfläche relativ niedrige Befestigungsblöcke aufweisen. An der Grundplatte können ferner Kabeladerführungen, Lager für Erddrahtklemmen, Kabelabfangungen (für Kabelbänder geeignet), Einsteck- und Rastlager für Stirnwände, Einstecktaschen für Kontaktbelegungskarten, erhöhte Seitenwände zur Adernraumbegrenzung und innere Querversteifungsrippen ausgebildet sein.

Zudem kann vorgesehen sein, daß der Boden auf seiner Außenfläche quer zum Rinnenprofil der Grundplatte verlaufende Versteifungsrippen aufweist.

Diese in Montagesollage senkrecht verlaufenden Versteifungsrippen auf der Rückseite des Bodens ermöglichen eine Hinterlüftung des Kastens als Feuchtigkeitsschutz.

Desweiteren ist bevorzugt vorgesehen, daß der Boden nahe der einen Stirnwand mittig ein Befestigungsloch und nahe der anderen Stirnwand symmetrisch zur Mitte zwei Befestigungslöcher für Anschraubmittel aufweist, wobei insbesondere im Bereich der Befestigungslöcher über die Außenflucht des Bodens vorragende Stützfüße oder Stützflächen ausgebildet sind.

Durch die Stützfüße oder Stützflächen mit den Befestigungslöchern ist eine Dreipunkt-Anschraubung möglich, was insbesondere bei unebenen Wänden vorteilhaft ist.

Durch die Stützflächen oder -füße kann das Unterlegen von Unterlegscheiben oder dergleichen unterbleiben.

Desweiteren ist bevorzugt vorgesehen, daß der Boden ausbrechbare Kabeleinlässe aufweist.

Die Verschlußmittel zum Verriegeln der Abdeckkappe gegen Verschiebung können im übrigen in einer entsprechenden Öffnung der Kappenstirnwand angeordnet und eingerastet sein, wobei der eigentliche Schloßhalter als Blindverschluß ausgebildet sein kann, der in die entsprechende Öffnung einsetzbar ist, wenn eine Sperrung der Öffnungsbewegung nicht erforderlich ist.

Die Montage des Verteilerkasten kann infolge der erfindungsgemäßen Ausbildung der Grundplatte so erfolgen, daß die Grundplatte mit in Montagerichtung quer verlaufendem Rinnenprofil verlegt und installiert werden kann, wobei die Grundplatte in beiden möglichen um 180° gedrehten Lagen fixierbar ist. Die Befestigung der Abdeckkappe ist in jedem Falle möglich.

Zudem ist bevorzugt vorgesehen, daß versteifende Abkantungen an der oberen und/oder unteren Randkante der Kappenwand ausgebildet sind, die mit Vertiefungen in den ersten Flächenbereichen ein Labyrinth bilden (Figur 5a).

Eine parallele Lösung der eingangs gestellten Aufgabe wird darin gesehen, daß daß an der einen Randkante der Kastenseitenwände zur benachbarten Stirnwand der Grundplatte vorragende Nasen ausgebildet sind, die in Montagesollage in Ausnehmungen der Grundplatte eingreifen und um die die Abdeckkappe aus einer schrägen Vormontagelage in die Montagesollage schwenkbar ist.

Bei einer derartigen Ausbildung erfolgt die Montage in der Weise, daß nach der Installation der Grundplatte die Abdeckkappe schräg der Grundplatte zugeführt wird, so daß die von der einen Randkante der Kastenseitenwände abragenden Nasen in entsprechende Ausnehmungen der Stirnwand der Grundplatte eingreifen können. Diese Ausnehmungen sind nahe des Bodens der Grundplatte in der Stirnwand ausgebildet. Nach dem Einsetzen der Nasen in die entsprechenden Ausnehmungen kann die Abdeckkappe um die Nasen in die Schließlage verschwenkt werden, die dann mit geeigneten Mitteln fixiert werden kann.

Beispielsweise kann die Fixierung lediglich mittels eines Drehriegels oder Schubriegels erfolgen, der vorzugsweise schlüsselbetätigt ist. Durch diese Ausbildung ist ein Relativverschieben von Abdeckkappe zur Grundplatte nicht erforderlich, so daß auch entsprechende Spaltbildungen entfallen können, die für einen Verschiebevorgang erforderlich wären. Hierdurch wird die Zugriffsmöglichkeit für Unbefugte zu dem Verteilerkasten noch besser verhindert, da es bei dieser gewählten Ausbildung äußerst schwierig ist, die Abdeckkappe durch Aushebeln unbefugt von der Grundplatte zu lösen. Die Abdeckkappe kann nahezu spaltfrei beispielsweise in zurückversetzte Bereiche der Stirnwände des Bodenteils eingelegt werden, so daß der Ansatz eines Aushebelungswerkzeuges äußerst erschwert ist.

Bevorzugt ist insbesondere bei dieser vorbeschriebenen Lösung vorgesehen, daß am anderen Ende der Kastenseitenwände Rastvorsprünge ausgebildet sind, die aus der Seitenwandebene vorragen und in Montagesollage an Wandungsteilen der Grundplatte klemmend anliegen.

Hierdurch wird eine Fixierung der Abdeckkappe in der Montagesollage erreicht, die dann durch Schließen des entsprechenden Schubriegelschlosses oder Drehriegelschlosses endgültig gesichert werden kann.

Bevorzugt ist ferner vorgesehen, daß die Kastenstirnwand an ihren Enden, die der oberen und unteren Stirnwand der Grundplatte zugewandt sind, zum Boden der Grundplatte rechtwinklig gerichtet abgewinkelt sind und daß die Abwinklungen in Montagesollage an Querstegen der Stirnwände anliegen und in diesen benachbarte Schlitze versenkt eingreifen.

Die Abwinklungen an der Kastenstirnwand als Bestandteil der Abdeckkappe greifen in Montagesollage in die entsprechenden Schlitze der Stirnwände der Grundplatte ein und liegen an den Querstegen der Stirnwände an, so daß eine Schubarretierung in beide möglichen Schubrichtungen erfolgt und zudem nicht nur eine Versteifung der Kastenstirnwand durch die Abwinklung erreicht ist, sondern auch die Eingriffsmöglichkeit mit einem Aufhebelungswerkzeug weiter erschwert ist.

Eine ferner bevorzugte Weiterbildung wird darin gesehen, daß die am Boden der Grundplatte rastbefestigbaren Stirnwände T-förmige Rastmittel aufweisen, deren Längssteg um einen bodenfernen Bereich biegbar ist und deren Quersteg in den den Längssteg seitlich überragenden Bereichen Rasthaken bildet, und daß am Boden im Einschubweg der Bereiche liegende Gegenrastmittel ausgebildet sind, die von einem Wandungsteil abragen, an welchem der Längssteg des Rastmittels in Rastlage anliegt, in der die Gegenrastmittel von den Bereichen untergriffen sind.

Durch diese Ausbildung wird erreicht, daß dann, wenn mit einem Aufhebelungswerkzeug versucht wird, die Abdeckkappe unter Gewaltanwendung von der Grundplatte zu lösen, sich die Rastverbindung nicht selbständig aufbiegt, sondern es kann allenfalls unter hoher Krafteinwendung zu einem Abriß der Haken kommen, so daß dann aber später feststellbar ist, daß der entsprechende Verteilerkasten unbefugt geöffnet worden ist. Die Anordnung der Rastmittel ist so getroffen, daß bei abgenommener Abdeckkapppe die Rastmittel zugänglich sind und manuell oder mittels Werkzeugeingriff die Rastverbindung gelöst werden kann.

Ausführungsbeispiele der Erfindung sind in der Zeichnung dargestellt und im folgenden näher beschrieben.

Es zeigt:
- Figur 1: einen Verteilerkasten für Fernmeldekabel in Vorderansicht bei halb entfernter Abdeckung;
- Figur 2: desgleichen von unten gesehen mit den Teilschnitten A-B und C-D;
- Figur 3: eine Ansicht von unten mit Teilschnitt C-E;
- Figur 4: eine Seitenansicht mit Teilschnitt F-G;
- Figur 5: einen Schnitt H-I der Figur 1 mit Teilschnitt K-L und Teilschnitt Figur 5a;
- Figur 6: die Ansicht der Abdeckung von unten gesehen;
- Figur 7: die Ansicht der Grundplatte von unten gesehen mit Ansicht der oberen Stirnwand, ebenfalls von unten gesehen;
- Figur 8: eine Grundplatte von unten gesehen mit angeformter Stirnwand;
- Figur 9 bis 16: eine bevorzugte Ausbildung eines Verteilerkastens in den Ansichten gemäß Figur 1 bis 8.

Der Verteilerkasten für Fernmeldekabel besteht im wesentlichen aus einer Grundplatte 1 mit Installationshilfen wie Kabeladerführungen, Erdklemmen, Kabelabfangmitteln, Kabeleinlässen und dergleichen, sowie einer Abdeckkappe 2, die die Grundplatte zu einer Kastenform ergänzt. Die Grundplatte 1 ist im Querschnitt U-förmig ausgebildet, wie insbesondere aus Figur 5 ersichtlich. Sie umfaßt einen Boden 3 sowie eine in Einbaulage obere Stirnwand 4 und untere Stirnwand 5. Die Abdeckkappe 2 ist im Querschnitt ebenfalls U-förmig ausgebildet, wie insbesondere aus Figur 6 ersichtlich, wobei sie die Kastenstirnwand 6 und zwei Kastenseitenwände 7 umfaßt.

Die Abdeckkappe 2 ist mit der Grundplatte 1 mittels Steck-Schiebe-Befestigungsmitteln verbindbar, wobei die Abdeckkappe 2 und die Grundplatte 1 mit einander kreuzendem Verlauf ihrer U-Formen und mit zueinander weisender Mündung der U-Formen aufeinander zuführbar und durch Längsverschiebung der Abdeckkappe 2 parallel zur Längsmittelachse ihrer U-Form an der Grundplatte 1 verriegelbar ist.

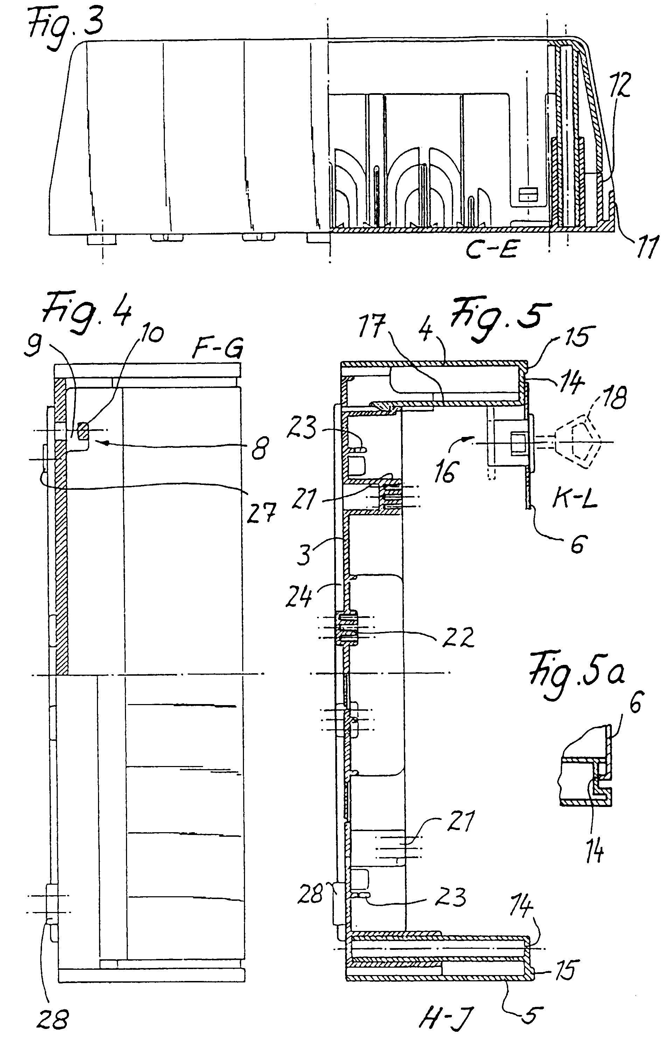

Zur Bildung der Verriegelungsmittel weist die Abdeckkappe 2 an den freien Randkanten der die Kastenseitenwände 7 bildenden Wandungsteile gleichgerichtete L-förmige Ausnehmungen 8 auf, deren einer Schenkel 9 randoffen ausmündet und parallel zu den Profilschenkeln der Abdeckkappe 2 verläuft, die die Seitenwandung 7 bildet. Solche L-förmigen Ausnehmungen 8 sind in den vier Eckbereichen der Abdeckkappe 2 vorgesehen. An den stirnwandfreien Randkanten des Bodens 3 der Grundplatte 1 sind Riegelstege 10 oder dergleichen Riegelmittel ausgebildet, auf die die Seitenwandungsteile 7 der Abdeckkappe 2 mit ihren L-förmigen Ausnehmungen 8 aufsteckbar und durch Parallelverschiebung der Teile zueinander verriegelbar sind. Die Verriegelungsposition ist beispielsweise in Figur 4 ersichtlich. Wie insbesondere aus Figur 2 und Figur 3 ersichtlich, sind an den stirnwandfreien Längsrandkanten des Bodens 3 der Grundplatte 1 durch zueinander parallele, vom Boden 3 rechtwinklig zur Abdeckkappe 2 hin abragende Wandungsteile 11,12 Einsteckschlitze für die freien Randkanten der Seitenwandungen 7 der Abdeckkappe 2 gebildet.

Diese weisen zwischen den Wandungsteilen 11,12 Verbindungsstege 10 auf, die als Riegelelemente dienen und die mit den Lförmigen Ausnehmungen 8 der Seitenwandungen 7 der Abdeckkappe 2 als Verriegelungsmittel zusammenwirken. Die Abdeckkappe 2 ist vorzugsweise einstückig aus Blech geformt. Wie insbesondere aus Figur 6 ersichtlich, sind die Seitenwandungen 7 der Abdeckkappe 2 durch parallel zu ihren Randkanten verlaufende Abkantungen 13 versteift.

Wie beispielsweise aus Figur 5 ersichtlich, sind die Stirnwände 4,5 der Grundplatte 1 an ihren freien Enden mit Auflageflächenbereichen 14 für die Ränder des Kastenstirnwandungsteiles 6 der Abdeckkappe 2 ausgebildet, deren Flächenerstreckung in Schieberichtung (in Figur 4 und 5 von oben nach unten) der Abdeckkappe 2 gering größer als der Verschiebeweg der Abdeckkappe 2 ist. Diese ersten Flächenbereiche 14 sind durch vorspringende zweite Flächenbereiche 15 begrenzt, deren Überstandshöhe über die ersten Flächenbereiche 14 der Wandstärke der Stirnwand 6 der Abdeckkappe 2 gleicht. Es ist damit ein im wesentlichen flächenbündiger Einbau möglich, wie insbesondere aus Figur 5 oben und Figur 4 ersichtlich ist.

Wie insbesondere aus Figur 5 ersichtlich, ist an der Stirnwand 6 der Abdeckkappe 2 ein schlüsselbetätigbarer Drehriegel 16 gehaltert, der bei in Schließlage befindlicher Abdeckkappe 2 gegen die Innenfläche 17 einer Stirnwand 4 der Grundplatte 1 anlegbar ist und so die Relativverschiebung von Abdeckkappe 2 zur Grundplatte 1 verhindert, wie in Figur 5 in durchgezogenen Linien gezeigt. Durch Drehung des Drehriegel-Verschlusses 16 mittels des Schlüssels 18 kann der Drehriegel in die Freigabelage verschwenkt werden, die in Figur 5 gestrichelt gezeigt ist. Die Abdeckkappe 2 ist dann relativ zur Grundplatte 1 verschiebbar.

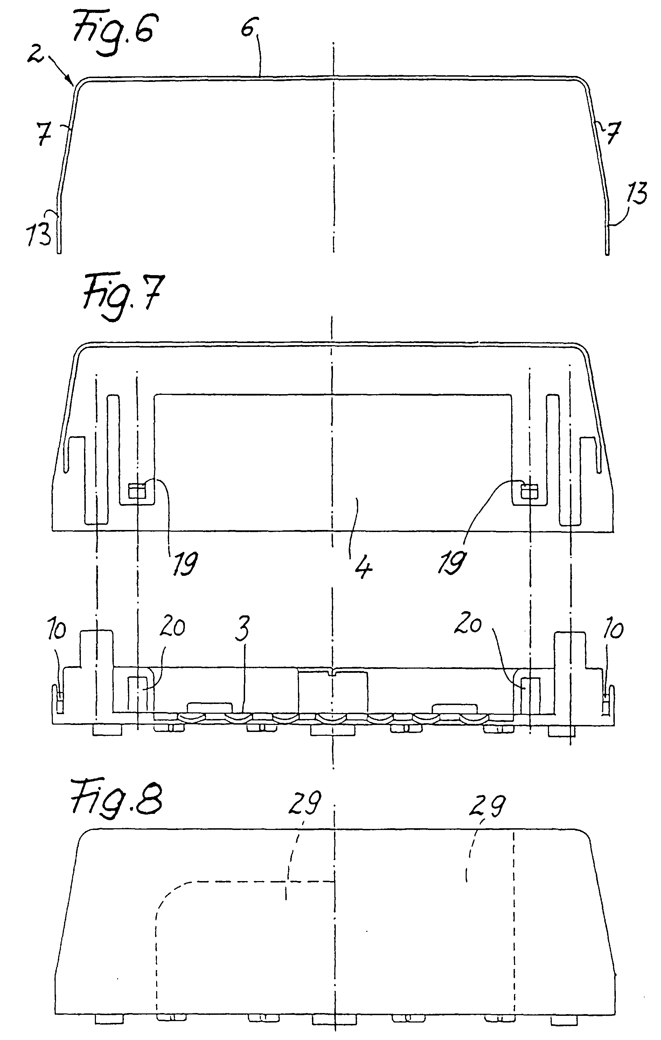

Die Grundplatte 1 kann aus Kunststoff einstückig geformt sein. Dies ist in Figur 8 verdeutlicht. Sie kann aber auch, was häufig bevorzugt ist, mehrteilig ausgebildet sein, wobei ein Bestandteil der Boden 3 und weitere Bestandteile die am Boden befestigbaren Stirnwände 4 bzw. 5 sein können. Vorzugsweise sind die Stirnwände 4 bzw. 5 am Boden 3 steck- und rastbefestigbar. Es sind dazu vorzugsweise manuell betätigbare Rastelemente 19 und mit diesen zusammenwirkende Rastausnehmungen 20 an der Stirnwand 4 bzw. 5 und am Boden 3 ausgebildet. Am Boden 3 der Grundplatte 1 können Befestigungsblöcke 21 nahe der Stirnwände 4 bzw. 5 ausgebildet sein, die Sacklöcher für selbstschneidende Schrauben zur Befestigung von Klemmleisten oder dergleichen aufweisen. Auch im Mittelbereich können am Boden 3 ähnliche Befestigungsblöcke 22 ausgebildet sein, die geringere Höhe aufweisen. Zudem kann der Boden durch innenliegende Stege 23 versteift sein. Der Boden 3 kann auf seiner Außenfläche quer zum Rinnenprofil der Grundplatte 1 verlaufende Versteifungsrippen 24 aufweisen, die für die Belüftung des Verteilerkastens nach der Installation vorteilhaft sind.

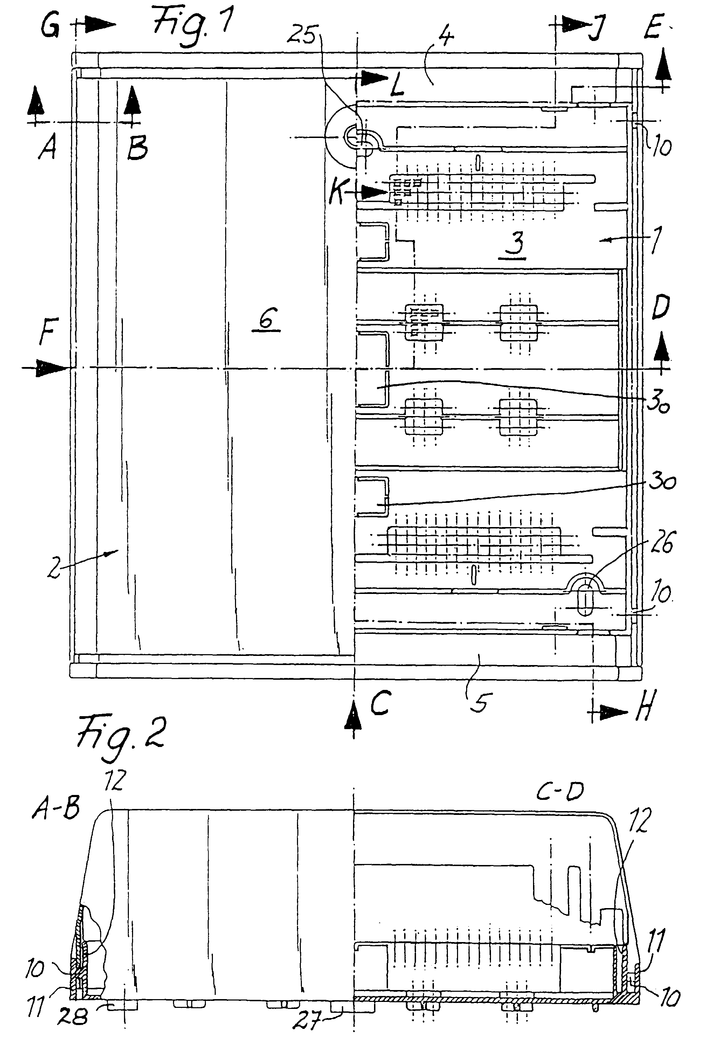

Wie insbesondere aus Figur 1 ersichtlich, kann der Boden 3 nahe der einen (oberen) Stirnwand 4 ein Befestigungsloch 25 und nahe der anderen Stirnwand 5 symmetrisch zur Mitte 2 Befestigungslöcher 26, von denen in Figur 1 nur eins ersichtlich ist, aufweisen, wobei der Bereich der Befestigungslöcher 25,26 über die Außenflucht des Bodens vorragende Stützfüße 27,28 aufweisen kann. Bei der Ausführungsform gemäß Figur 8 ist verdeutlicht, daß die Stirnwände 4 oder 5 mit dem Boden 3 der Grundplatte 1 einstückig ausgebildet sein können und Kabeleinführungsbereiche 29 in geeigneter Weise von oben, von unten oder von vorn eingesetzt werden können. Hierdurch können unterschiedliche Kabeleinführungsbereiche mit den Stirnwänden kombiniert werden.

Gemäß Darstellung in Figur 5a können versteifende Abkantungen an der oberen und unteren Randkante der Kappenwand 6 vorgesehen sein, die mit Vertiefungen z.B. in den ersten Flächenbereichen 14 ein Labyrinth bilden.

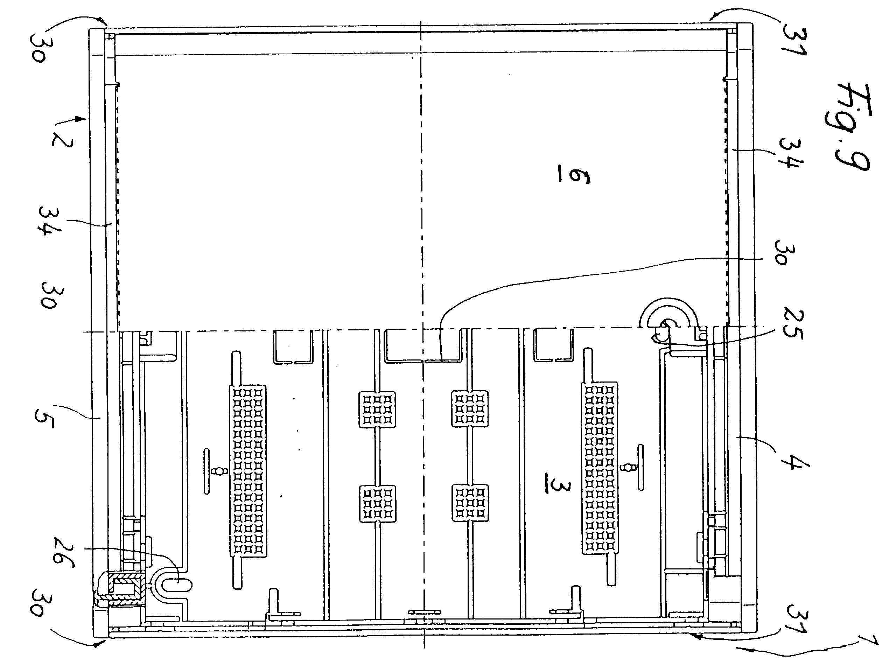

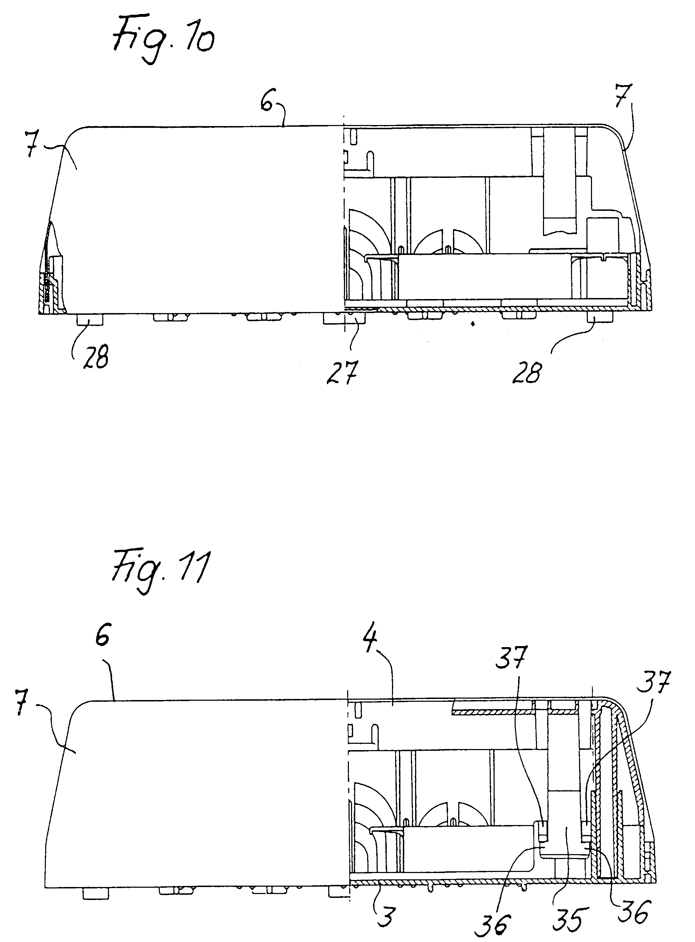

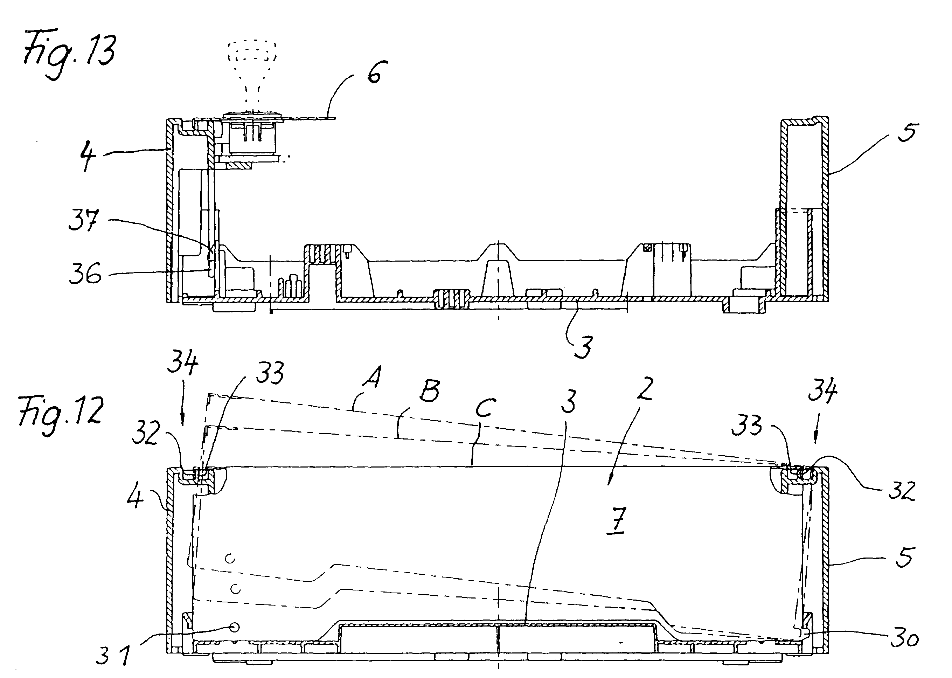

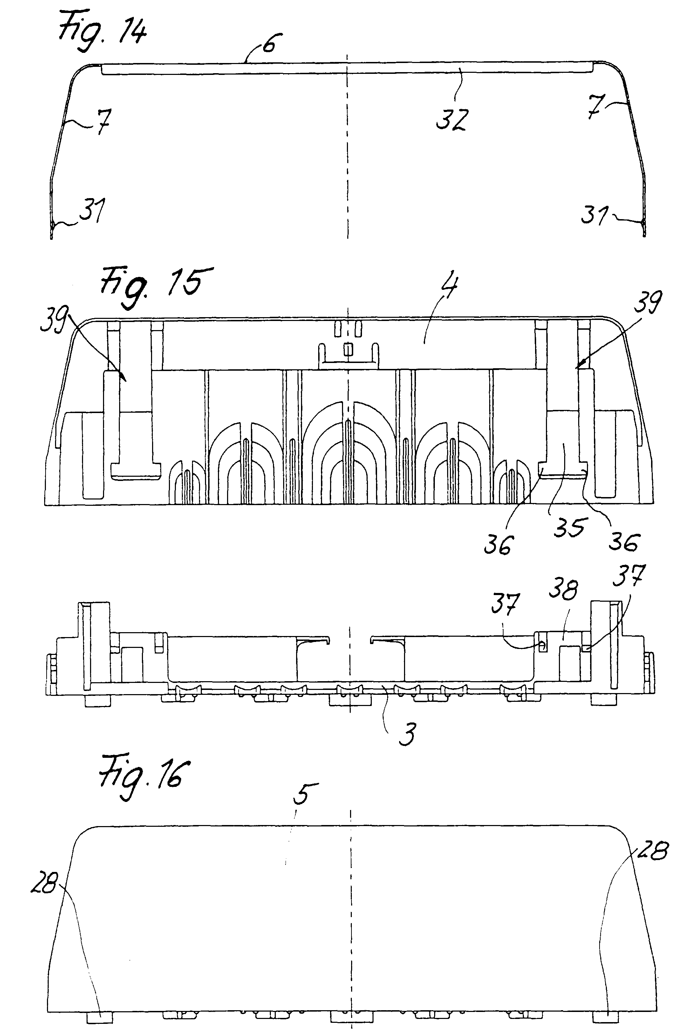

In Figur 9 bis 16 ist eine bevorzugte Variante eines Verteilerkastens gezeigt. Bei dieser Ausbildung ist ein anderes Verriegelungsprinzip verwirklicht. Dabei sind an der einen Randkante der Kastenseitenwände 7 zur in Montagesollage benachbarten Stirnwand 5 der Grundplatte 1 vorragende Nasen 30 ausgebildet, die in Montagesollage in Ausnehmungen der Stirnwand 5 eingreifen. Zum Befestigen der Abdeckkappe 2 an der Grundplatte 1 wird diese in der Lage A gemäß Figur 12 schräg der Grundplatte 1 zugeführt, so daß die Nasen 30 in die entsprechenden Ausnehmungen der Grundplatte 1 eingreifen. Nachfolgend wird dann die Abdeckkappe aus der Position A über die Position B in die Position C verschwenkt. In dieser Position ist die Sollage erreicht. Um diese Sollage zu sichern, sind an dem Ende der Kastenseitenwände 7, die keine Nasen 30 aufweisen, Rastvorsprünge 31 ausgebildet, die beispielsweise in Form von ausgeprägten Warzen oder dergleichen geformt sein können. Diese ragen aus der Seitenwandebene vor und liegen in Montagesollage an Wandungsteilen beispielsweise 11,12 der Grundplatte 1 klemmend oder unter Reibschluß an.

Bei dieser Ausführungsform ist die Kastenstirnwand 6 an ihren Enden, die der oberen und unteren Stirnwand 4,5 der Grundplatte 1 zugewandt sind, zum Boden 3 der Grundplatte 1 hin rechtwinklig gerichtet abgewinkelt. Die Abwinklungen liegen in der Montagesollage an Querstegen 33 der Stirnwände 4,5 der Grundplatte 1 an, wobei die Abwinklungen in kopfseitige Schlitze 34 der Stirnwände 4,5 versenkt eingreifen, die den Querstegen 33 benachbart sind. Die Querstege 33 sind dabei jeweils von den Abwinklungen 32 bzw. der Anschlußfläche der Kastenstirnwand 6 übergriffen, so daß sie relativ zur Abdeckkappe innenliegend angeordnet sind.

Die vorzugsweise am Boden 3 der Grundplatte 1 rastbefestigbaren Stirnwände 4,5 weisen T-förmige Rastmittel 35 auf, deren Längssteg um einen bodenfernen Bereich 39 biegbar ist und deren Quersteg in den den Längssteg seitlich überragenden Bereichen 36 Rasthaken bildet. Am Boden 3 sind im Einschubweg der Bereiche 33 liegende Gegenrastmittel 37 ausgebildet, die von einem Wandungsteil 38 ab ragen, an welchem der Längssteg des Rastmittels 35 in der Rastlage anliegt, in welcher die Gegenrastmittel 37 von den Bereichen 36 untergriffen sind. Die entsprechenden Rastkanten sind dabei rechtwinklig ausgebildet und die Eingriffskante verläuft parallel zur Kastenstirnwand 6 bzw. zum Boden 3 der Grundplatte 1. Durch diese Anordnung wird erreicht, daß bei einem Aushebelversuch zum Zwecke des gewaltsamen Lösens der Abdeckkappe 2 von der Grundplatte 1 die Rastverbindung nicht selbständig öffnet, sondern nur unter Abriß der Rasthaken oder Rastmittel gewaltsam geöffnet werden kann. Eine derartige gewaltsame Manipulation ist dann später erkennbar.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Verteilerkasten für Fernmeldekabel, bestehend aus einer Grundplatte (1) und einer Abdeckkappe (2), wobei die Grundplatte mit Installationshilfen wie Kabeladerführungen, Erdklemmen, Kabelabfangmitteln, Kabeleinlässen oder dergleichen versehen sein kann und wobei die Grundplatte (1) im Querschnitt U-förmig ausgebildet ist, und einen Boden (3) mit in Einbaulage oberer und unterer Stirnwand (4,5) umfaßt, die Abdeckkappe (2) ebenfalls im Querschnitt U-förmig ausgebildet ist und die Kastenstirnwand (6) sowie die beiden Kastenseitenwände (7) umfaßt und die Abdeckkappe (2) mit der Grundplatte (1) in Montagesollage mittels Befestigungsmitteln verbindbar ist, wobei die Abdeckkappe (2) und die Grundplatte (1) mit einander kreuzendem Verlauf ihrer U-Formen und mit zueinander weisender Mündung der U-Formen zur Erzielung der Montagesollage aufeinander zuführbar ist,
**dadurch gekennzeichnet,** daß die Abdeckkappe (2) mit der Grundplatte (1) mittels Steckschiebe-Befestigungsmitteln verbindbar ist, wobei die Verriegelung der Teile aneinander durch Längsverschiebung der Abdeckkappe (2) parallel zur Längsmittelachse ihrer U-Form relativ zur Grundplatte (1) erfolgt.

2. Verteilerkasten nach Anspruch 1,
**dadurch gekennzeichnet**, daß an den freien Randkanten der die Kastenseitenwände (7) bildenden Wandungsteile der Abdeckkappe (2) gleichgerichtete L-förmige Ausnehmungen (8) ausgebildet sind, deren einer Schenkel (9) randoffen ausmündet und parallel zu dem Profilschenkel der Abdeckkappe (2) verläuft, die die Seitenwandung (7) bildet, und daß an den stirnwandfreien Randkanten oder nahe der stirnwandfreien Randkanten des Bodens (3) der Grundplatte (1) Riegelstege (10) oder dergleichen Riegelmittel ausgebildet sind, auf die die Seitenwandungsteile der Abdeckkappe (2) mit ihren L-förmigen Ausnehmungen (9) aufsteckbar und durch Parallelverschiebung der Teile zueinander verriegelbar sind.

3. Verteilerkasten nach Anspruche 1 oder 2,
**dadurch gekennzeichnet**, daß an den stirnwandfreien Längsrandkanten des Bodens (3) der Grundplatte (1) durch zueinander parallele, vom Boden (3) zur Abdeckkappe (2) hin abragende Wandungsteile (11,12) Einsteckschlitze für die freien Randkanten der Seitenwandungen (7) der Abdeckkappe (2) gebildet sind, die zwischen den Wandungteilen (11,12) Verbindungsstege (10) aufweisen, die als Riegelelemente dienen und die mit den L-förmigen Ausnehmungen (8) der Seitenwandungen (7) der Abdeckkappe (2) als Verriegelungsmittel zusammenwirken.

4. Verteilerkasten nach einem der Ansprüche 1 bis 3,
**dadurch gekennzeichnet**, daß die Stirnwände (4,5) der Grundplatte (1) an ihren freien Enden Auflageflächenbereiche (14) für die Ränder des Kastenstirnwandungsteiles der Abdeckkappe (2) bilden, deren Flächenerstreckung in Schieberichtung der Abdeckkappe (2) gering größer als der Verschiebeweg der Abdeckkappe (2) ist.

5. Verteilerkasten nach Anspruch 4,
**dadurch gekennzeichnet**, daß die ersten Flächenbereiche (14) durch vorspringende zweite Flächenbereiche (15) begrenzt sind, deren Überstandshöhe über die ersten Flächenbereiche (14) der Wandstärke der Stirnwand (6) der Abdeckkappe (2) gleicht.

6. Verteilerkasten nach einem der Ansprüche 1 bis 5,
**dadurch gekennzeichnet**, daß an der Stirnwand (6) der Abdeckkappe (2) ein Verschlußmittel (16) gehaltert ist, mittels dessen die in Schließlage befindliche Abdeckkappe (2) verriegelbar ist.

7. Verteilerkasten nach Anspruch 6,
**dadurch gekennzeichnet**, daß an der Stirnwand (6) der Abdeckkappe (2) ein Schubriegel oder vorzugsweise ein schlüsselbetätigbarer Drehriegel (z.B. 16) gehaltert ist, der bei in Schließlage befindlicher Abdeckkappe (2) gegen die Innenfläche (17) einer Stirnwand (4 oder 5) der Grundplatte (1) anlegbar ist und so die Relativverschiebung von Abdeckkappe (2) zu Grundplatte (1) verhindert.

8. Verteilerkasten nach einem der Ansprüche 1 bis 7
**dadurch gekennzeichnet**, daß die Stirnwände (4,5) am Boden (3) steck- und/oder rastbefestigbar sind.

9. Verteilerkasten nach einem der Ansprüche 1 bis 8,
**dadurch gekennzeichnet**, daß die Stirnwände (4,5) als Doppelstirnwand (untere und/oder obere) ausgebildet sind, so daß eine Doppelstirnwand an zwei angereihten Böden (3) zweier Verteilerkästen befestigbar ist und eine starre Brücke zwischen den Böden (3) bildet.

10. Verteilerkasten nach einem der Ansprüche 1 bis 9,
**dadurch gekennzeichnet**, daß der Boden (3) nahe der einen Stirnwand (4 oder 5) mittig ein Befestigungsloch (25) und nahe der anderen Stirnwand (5 oder 4) symmetrisch zur Mitte zwei Befestigungslöcher (26) für Anschraubmittel aufweist, wobei insbesondere im Bereich der Befestigungslöcher (25,26) über die Außenflucht des Bodens (3) vorragende Stützfüße (27,28) oder Stützflächen ausgebildet sind.

11. Verteilerkasten nach einem der Ansprüche 1 bis 10,
**dadurch gekennzeichnet**, daß versteifende Abkantungen an der oberen und/oder unteren Randkante der Kappenwand (6) ausgebildet sind, die mit Vertiefungen in den ersten Flächenbereichen (14) ein Labyrinth bilden (Figur 5a).

12. Verteilerkasten für Fernmeldekabel, bestehend aus einer Grundplatte (1) und einer Abdeckkappe (2), wobei die Grundplatte mit Installationshilfen wie Kabeladerführungen, Erdklemmen, Kabelabfangmitteln, Kabeleinlässen oder dergleichen versehen sein kann, und wobei die Grundplatte (1) im Querschnitt U-förmig ausgebildet ist, und einen Boden (3) mit in Einbaulage oberer und unterer Stirnwand (4,5) umfaßt, die Abdeckkappe (2) ebenfalls im Querschnitt U-förmig ausgebildet ist und die Kastenstirnwand (6) sowie die beiden Kastenseitenwände (7) umfaßt und die Abdeckkappe (2) mit der Grundplatte (1) in Montagesollage mittels Befestigungsmitteln verbindbar ist, wobei die Abdeckkappe (2) und die Grundplatte (1) mit einander kreuzendem Verlauf ihrer U-Formen und mit zueinander weisender Mündung der U-Formen zur Erzielung der Montagesollage aufeinander zuführbar ist,
**dadurch gekennzeichnet**, daß an der einen Randkante der Kastenseitenwände (7) zur benachbarten Stirnwand (5) der Grundplatte (1) vorragende Nasen (30) ausgebildet sind, die in Montagesollage in Ausnehmungen der Stirnwand (5) eingreifen und um die die Abdeckkappe (2) aus einer schrägen Vormontagelage in die Montagesollage schwenkbar ist.

13. Verteilerkasten nach Anspruch 12,
**dadurch gekennzeichnet**, daß am anderen Ende der Kastenseitenwände (7) Rastvorsprünge (31) ausgebildet sind, die aus der Seitenwandebene vorragen und in Montagesollage an Wandungsteilen (z.B. 11,12) der Grundplatte (1) klemmend anliegen.

14. Verteilerkasten nach einem der Ansprüche 12 oder 13,
**dadurch gekennzeichnet**, daß die Kastenstirnwand (6) an ihren Enden, die der oberen und unteren Stirnwand (4,5) der Grundplatte (1) zugewandt sind, zum Boden (3) der Grundplatte (1) rechtwinklig gerichtet abgewinkelt sind und daß die Abwinklungen (32) in Montagesollage an Querstegen (33) der Stirnwände (4,5) anliegen und in diesen benachbarte Schlitze (34) versenkt eingreifen.

15. Verteilerkasten nach einem der Ansprüche 12 bis 14,
**dadurch gekennzeichnet**, daß die am Boden (3) der Grundplatte (1) rastbefestigbaren Stirnwände (4,5) T-förmige Rastmittel (35) aufweisen, deren Längssteg um einen bodenfernen Bereich biegbar ist und deren Quersteg in den den Längssteg seitlich überragenden Bereichen (36) Rasthaken bildet, und daß am Boden (3) im Einschubweg der Bereiche (36) liegende Gegenrastmittel (37) ausgebildet sind, die von einem Wandungsteil (38) abragen, an welchem der Längssteg des Rastmittels (35) in Rastlage anliegt, in der die Gegenrastmittel (37) von den Bereichen (36) untergriffen sind.

## Claims

1. Distributor housing for telecommunications cable, comprising a baseplate (1) and a cap (2), wherein the baseplate can be provided with installation aids such as cable strand guides, earth terminals, cable clamping means, cable inlets or the like and wherein the baseplate (1) has a U-shaped cross-section and encloses a base (3) with, in the assembly position, an upper and lower end wall (4, 5), the cap (2) also has a U-shaped cross-section and encloses the end wall (6) of the housing and the two side walls (7) of the housing and the cap (2) can be connected with the baseplate (1) in the correct assembly position by means of fastening means, whereby the cap (2) and the baseplate (1), with intersecting U sections and with the opening of the U sections facing one another, can be guided towards one another to achieve the correct assembly position, characterised in that the cap (2) is connectable with the baseplate (1) by means of socket-slide fastening means, whereby the locking together of the parts is effected by the longitudinal movement of the cap (2) parallel to the longitudinal central axis of its U section relative to the baseplate (1).

2. Distributor housing according to Claim 1, characterised in that, at the free edges of the wall sections of the cap (2) forming the side walls (7) of the housing, parallel L-shaped recesses (8) are formed, of which one side (9) opens out into an opening in the edge and runs parallel to the profiled side of the cap (2) which forms the side wall (7), and that at the end-wall-free edges or near the end-wall-free edges of the base (3) of the baseplate (1), bolt bars (10) or similar bolting means are formed, onto which the side wall sections of the cap (2) with their L-shaped recesses (9) can be fitted and locked together with one another by parallel movement of the parts.

3. Distributor housing according to Claim 1 or 2, characterised in that at the longitudinal end-wall-free edges of the base (3) of the baseplate (1), slots for the free edges of the side walls (7) of the cap (2) are formed by wall sections (11, 12) running parallel to one another from the base (3) up to the cap (2), which have connecting bars (10) between the wall sections (11, 12), which serve as bolting elements and which cooperate as locking means with the L-shaped recesses (8) of the side walls (7) of the cap (2).

4. Distributor housing according to one of Claims 1 to 3, characterised in that the end walls (4, 5) of the baseplate (1) form supporting surface areas (14) at their free ends for the edges of the housing end-wall section of the cap (2), whose surface extension in the direction in which the cap (2) slides is slightly larger than the path along which the cap (2) moves.

5. Distributor houbing according to Claim 4, characterised in that the first surface areas (14) are delimited by projecting second surface areas (15), of which the height of projection over the first surface areas (14) is equal to the thickness of the end wall (6) of the cap (2).

6. Distributor housing according to one of Claims 1 to 5, characterised in that a locking means (16) is mounted on the end wall (6) of the cap (2), by means of which the cap (2) can be locked when in the closed position.

7. Distributor housing according to Claim 6, characterised in that a sliding bolt or preferably a key-operated spagnolet (e.g. 16) is mounted on the end wall (6) of the cap (2), which, when the cap (2) is in the closed position, can come to rest against the inner surface (17) of an end wall (4 or 5) of the baseplate (1) and thus prevent the movement of the cap (2) in relation to the baseplate (1).

8. Distributor housing according to one of Claims 1 to 7, characterised in that the end walls (4, 5) can be fastened to the base (3) by means of sockets and/or latches.

9. Distributor housing according to one of Claims 1 to 8, characterised in that the end walls (4, 5) are formed as a double end wall (lower and/or upper) so that a double end wall can be fastened to two adjoining bases (3) of two distributor housings and forms a rigid bridge between the bases (3).

10. Distributor housing according to one of the Claims 1 to 9, characterised in that near one end wall (4 or 5) the base (3) has a central mounting hole (25) and near the other end wall (5 or 4) two mounting holes (26) symmetrical in relation to the centre for screwing means, wherein, particularly in the area of the mounting holes (25, 26), supporting feet (27, 28) or supporting surfaces projecting above the outer edge of the base (3) are formed.

11. Distributor housing according to one of Claims 1 to 10, characterised in that reinforcing bevels are formed at the upper and/or lower edge of the cap wall (6), which form a labyrinth with indents in the first surface areas (14) (Figure 5a).

12. Distributor housing for telecommunications cable, comprising a baseplate (1) and a cap (2), wherein the baseplate can be provided with installation aids such as cable strand guides, earth terminals, cable clamping means, cable inlets or the like and wherein the baseplate (1) has a U-shaped cross-section and encloses a base (3) with, in the assembly position, an upper and lower end wall (4, 5), the cap (2) also has a U-shaped cross-section and encloses the end wall (6) of the housing and the two side walls (7) of the housing and the cap (2) can be connected with the baseplate (1) in the correct assembly position by means of fastening means, whereby the cap (2) and the baseplate (1), with intersecting U sections and with the opening of the U sections facing one another, can be guided towards one another to achieve the correct assembly position, characterised in that at one edge of the side walls (7) of the housing, lugs (30) projecting towards the adjoining end wall (5) of the baseplate (1) are formed, which in the correct assembly position engage with recesses of the end wall (5) and around which the cap (2) can be pivoted from a slanting pre-assembly position to the correct assembly position.

13. Distributor housing according to Claim 12, characterised in that at the other end of the housing side walls (7) latch projections (31) are formed which project from the plane of the side wall and, in the correct assembly position, clamp against wall sections (e.g., 11, 12) of the baseplate (1).

14. Distributor housing according to one of Claims 12 or 13, characterised in that the ends of the end wall (6) of the housing which are turned towards the upper and lower end wall (4, 5) of the baseplate (1) are bent at right angles to the base (3) of the baseplate (1) and that in the correct assembly position the bends (32) rest against transverse bars (33) of the end walls (4, 5) and engage below the surface with these adjacent slots (34).

15. Distributor housing according to one of Claims 12 to 14, characterised in that the end walls (4, 5) fastenable by means of latches to the base (3) of the baseplate (1) have T-shaped latching means (35), whose longitudinal bar can be flexed around an area distant from the base and whose transverse bar forms locating hooks in the areas (36) projecting laterally from the longitudinal bar, and that in the base (3) counter-latching means are formed in the insert path of the areas (36), which protrude downwards from a wall section (38) against which the longitudinal bar of the latching means (35) rests in the latched position, in which the counter-latching means (37) are supported underneath by the areas (36).

## Revendications

1. Armoire de distribution pour câbles de télécommunication, constituée d'une plaque de base (1) et d'un capot de recouvrement (2), la plaque de base pouvant être pourvue d'auxiliaires d'installation tels que des guidages d'âme de câble, des bornes de terre, des moyens de contention de câbles, des ouvertures pour câbles ou analogues et la plaque de base (1) ayant une section transversale en forme de U, et comprenant un fond (3) ayant en position de montage une paroi frontale supérieure et une paroi frontale inférieure (4, 5), le capot de recouvrement (2) étant réalisé également avec une section transversale en forme de U et comprenant la paroi frontale de l'armoire (6) ainsi que les deux parois latérales (7) de l'armoire et le capot de recouvrement (2) étant susceptible d'être relié à la plaque de base (1) dans une position de consigne de montage, à l'aide de moyens de fixation, le capot de recouvrement (2) et la plaque de base (1) étant susceptibles d'être amenés l'un sur l'autre avec une position de leur forme en U se croisant mutuellement et avec une embouchure tournée l'une vers l'autre des formes en U en vue d'obtenir la position de consigne de montage,
caractérisée en ce que le capot de recouvrement (2) est susceptible d'être relié à la plaque de base (1) à l'aide de moyens de fixation à coulissement et à emboîtement, le verrouillage des pièces les unes aux autres s'effectuant par déplacement longitudinal du capot de recouvrement (2), parallèlement à l'axe médian longitudinal de sa forme en U, par rapport à la plaque de base (1).

2. Armoire de distribution selon la revendication 1,
caractérisée en ce que sur les arêtes de bordure libres des parties de paroi, constituant les parois latérales (7) de l'armoire, du capot de recouvrement (2), sont réalisés des évidements (8) en forme de L orientés dans le même sens, dont une branche (9) débouche ouverte en bordure et court parallèlement à la branche profilée du capot de recouvrement (2) qui constitue la paroi latérale (7) et en ce que, sur les arêtes de bordure, exemptes de parois frontales, ou près des arêtes de bordure, exemptes de parois frontales, du fond (3) de la plaque de base (1) sont réalisés des nervures de verrouillage (10) ou des moyens de verrouillage analogues, sur lesquels les parties de paroi latérale du capot de recouvrement (2) sont susceptibles d'être enfilées par leurs évidements (9) en forme de L et d'être verrouillées les unes aux autres par un déplacement parallèle des parties.

3. Armoire de distribution selon la revendication 1 ou 2,
caractérisée en ce que, sur les arêtes de bordure longitudinale exemptes de parois frontales, du fond (3) de la plaque de base (1), sont constituées, par des parties de paroi (11, 12) parallèles entre elles, décalées du fond (3) vis-à-vis du capot de recouvrement (2), des fentes d'enfilage pour les arêtes de bordure libre des parois latérales (7) du capot de recouvrement (2), fentes d'enfilage qui présentent entre les parties de paroi (11, 12)) des nervures de liaison (10) servant d'éléments de verrouillage et coopérant avec les évidements (8) en forme de L des parois latérales (7) du capuchon de recouvrement (2) , à titre de moyen de verrouillage.

4. Armoire de distribution selon l'une des revendications 1 à 3,
caractérisée en ce que les parois frontales (4, 5) de la plaque de base (1) constituent sur leurs extrémités libres des zones de surface de dépose (14) pour les bords de la partie de paroi frontale d'armoire du capot de recouvrement (2), dont l'étendue en surface dans la direction de coulissement du capuchon de recouvrement (2) est légèrement supérieure à la course de déplacement coulissant du capot de recouvrement (2).

5. Armoire de distribution selon la revendication 4,
caractérisée en ce que les premières zones de surface (14) sont délimitées par des deuxièmes zones de surface (15) en saillie, dont la hauteur de dépassement sur les premières zones de surface (14) est égale à l'épaisseur de la paroi frontale (6) du capot de recouvrement (2).

6. Armoire de distribution selon l'une des revendications 1 à 5,
caractérisée en ce que, sur la paroi frontale (6) du capuchon de recouvrement (2), est fixé un moyen de fermeture (16), au moyen duquel le capot de recouvrement (2) se trouvant en position de fermeture est susceptible d'être verrouillé.

7. Armoire de distribution selon la revendication 6,
caractérisée en ce que, sur la paroi frontale (6) du capot de recouvrement (2), est fixé un verrou à coulissement ou bien, de préférence, un verrou tournant (par exemple 16) susceptible d'être actionné par une clef qui, lorsque le capot de recouvrement (2) se trouve en position de fermeture, est susceptible d'être appliqué contre la surface intérieure (17) d'une paroi frontale (4 ou 5) de la surface de base (1) et empêche ainsi tout déplacement relatif entre le capot de recouvrement (2) et la plaque de base (1).

8. Armoire de distribution selon l'une des revendications 1 à 7,
caractérisée en ce que les parois frontales (4, 5) sont susceptibles d'être fixées par emboîtement et/ou encliquetage sur le fond (3).

9. Armoire de distribution selon l'une des revendications 1 à 8,
caractérisée en ce que les parois frontales (4, 5) sont réalisées sous forme de paroi frontale double (inférieure et/ou supérieure), de manière qu'une paroi frontale double soit susceptible d'être fixée sur deux fonds (3) alignés de deux armoires de distribution et constituent un pont rigide entre les fonds (3).

10. Armoire de distribution selon l'une des revendications 1 à 9,
caractérisée en ce que le fond (3) présente, à proximité d'une paroi frontale (4 ou 5), centralement un trou de fixation (25) et, près de l'autre paroi frontale (5 ou 4), symétriquement par rapport au centre, deux trous de fixation (26) destinés à des moyens de montage par vissage, en particulier dans la zone des trous de fixation (25, 26) étant réalisés des pieds d'appui (27, 28) qui dépassent de l'alignement extérieur du fond (3).

11. Armoire de distribution selon l'une des revendications 1 à 10,
caractérisée en ce que des replis de rigidification sont réalisés sur l'arête de bordure supérieure et/ou inférieure de la paroi de capuchon (6), constituant un labyrinthe avec les cavités ménagées dans les premières zones de surface (14) (figure 5a).

12. Armoire de distribution pour des câbles de télécommunication, constituée d'une plaque de base (1) et d'un capot de recouvrement (2), la plaque de base pouvant être pourvue d'auxiliaires d'installation tels que des guidages d'âme de câble, des bornes de terre, des moyens de contention de câbles, des ouvertures pour câbles ou analogues et la plaque de base (1) ayant une section transversale en forme de U, et comprenant un fond (3) ayant en position de montage une paroi frontale supérieure et une paroi frontale inférieure (4, 5), le capot de recouvrement (2) étant réalisé également avec une section transversale en forme de U et comprenant la paroi frontale de l'armoire (6) ainsi que les deux parois latérales (7) de l'armoire et le capot de recouvrement (2) étant susceptible d'être relié à la plaque de base (1) dans une position de consigne de montage, à l'aide de moyens de fixation, le capot de recouvrement (2) et la plaque de base (1) étant susceptibles d'être amenés l'un sur l'autre avec une allure de leur forme en U se croisant mutuellement et avec une embouchure tournée l'une vers l'autre des formes en U en vue d'obtenir la position de consigne de montage,
caractérisée en ce que sur une arête de bordure des parois latérales (7) de l'armoire sont réalisés des ergots (30), faisant saillie en direction de la paroi frontale (5) voisine de la plaque de base (1) et s'engageant, en position de consigne de montage, dans des évidements de la paroi frontale (5), et ergots autour desquels le capot de recouvrement (2) est susceptible de pivoter pour passer de sa position oblique de prémontage à la position de consigne de montage.

13. Armoire de distribution selon la revendication 12,
caractérisée en ce qu'à l'autre extrémité des parois latérales d'armoire (7) sont réalisées des saillies d'encliquetage (31) qui dépassent du plan de la paroi latérales et qui appuient avec un effet de serrage, dans la position de consigne de montage, sur les parties de paroi (par exemple, 11, 12) de la plaque de base (1).

14. Armoire de distribution selon l'une des revendications 12 ou 13,
caractérisée en ce que la paroi frontale (6) d'armoire a ses extrémités, tournées vers les parois frontales supérieure et inférieure (4, 5), de la plaque base (1) orientées à angle droit par rapport au fond (3) de la plaque de base (1), et en ce que les pliages (32) appuient, dans la position de consigne de montage, sur des nervures transversales (33) des parois frontales (4, 5) et s'engagent de façon noyée dans des fentes (34) voisines de celles-ci.

15. Armoire de distribution selon l'une des revendications 12 à 14,
caractérisée en ce que les parois frontales (4, 5) susceptibles d'être fixées par encliquetage sur le fond (3) de la plaque de base (1) présentent des moyens d'encliquetage (35) en forme de T, dont la nervure longitudinale est susceptible d'être fléchie autour d'une zone distante du fond et dont la nervure transversale constitue, dans les zones (36) dépassant latéralement de la nervure longitudinale, des crochets d'encliquetage, et en ce que sur le fond (3) sont réalisés des moyens d'encliquetage conjugués (37) situés dans la course d'emboîtement des zones (36), moyens qui dépassent d'une partie de paroi (38) sur laquelle appuie la nervure longitudinale du moyen d'encliquetage (35) lorsque l'on est dans la position d'encliquetage, dans laquelle les moyens d'encliquetage conjugués (37) sont saisis par le dessous depuis les zones (36).
